(19) **Europäisches Patentamt / European Patent Office / Office européen des brevets**

(11) **EP 4 535 192 A2**

(12) **EUROPEAN PATENT APPLICATION**

(43) Date of publication:
**09.04.2025 Bulletin 2025/15**

(21) Application number: **24203046.8**

(22) Date of filing: **20.12.2021**

(51) International Patent Classification (IPC):
***G06F 16/901*** (2019.01)

(52) Cooperative Patent Classification (CPC):
**G06F 16/906; G06F 16/9024; G06F 18/2323;**
**G06F 18/29; G06N 7/01; G06Q 20/389;**
**G06Q 20/4016;** G06N 5/01; G06N 20/20

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.12.2020 US 202063127941 P**
**14.12.2021 PT 2021117636**

(62) Document number(s) of the earlier application(s) in
accordance with Art. 76 EPC:
**21215898.4 / 4 016 430**

(71) Applicant: **Feedzai - Consultadoria e Inovação**
**Tecnológica, S.A.**
**3030-199 Coimbra (PT)**

(72) Inventors:
• **SILVA, Maria Ines**
**3030-199 Coimbra (PT)**
• **OLIVEIRA APARÍCIO, David**
**3030-199 Coimbra (PT)**

• **BARRIGA NEGRA ASCENSÃO, João Tiago**
**3030-199 Coimbra (PT)**
• **SANTOS RODRIGUES BIZARRO, Pedro Gustavo**
**3030-199 Coimbra (PT)**
• **EDDIN, Ahmad Naser**
**3030-199 Coimbra (PT)**
• **BONO, Jacopo**
**3030-199 Coimbra (PT)**

(74) Representative: **Patentree**
**Edificio Net**
**Rua de Salazares, 842**
**4149-002 Porto (PT)**

Remarks:
•This application was filed on 26-09-2024 as a
divisional application to the application mentioned
under INID code 62.
•Claims filed after the date of filing of the application /
after the date of receipt of the divisional application
(Rule 68(4) EPC).

(54) **GRAPH TRAVERSAL FOR MEASUREMENT OF FRAUDULENT NODES**

(57) The present disclosure relates to a graph traversal computer-implemented method for measurement of fraudulent nodes, a system and a computer program product embodied in a non-transitory computer readable medium. In particular, to a computer-implemented method, comprising receiving a graph of nodes and edges; receiving an identification of a starting node in the graph; automatically performing traversal walks on the graph from the starting node, wherein performing each of the traversal walks includes traversing to a randomly selected next node until any of one or more stopping criteria is met; using one or more processors to determine one or more metrics based on the traversal walks; and using at least a portion of the one or more metrics to predict an illicit activity or entity.

FIG. 1

EP 4 535 192 A2

## Description

### TECHNICAL FIELD

The present disclosure relates to a graph traversal computer-implemented method for measurement of fraudulent nodes, a system and a computer program product embodied in a non-transitory computer readable medium.

### BACKGROUND

Data analysis is a process for obtaining raw data and converting it into information useful for informing conclusions or supporting decision-making. Typical data analysis steps include collecting data, organizing data, manipulating data, and summarizing data. Oftentimes, data analysis is performed automatically by computer systems on datasets that are too large and complex for analysis by a human. In some scenarios, it is desirable to apply data analysis to graph data to support decision-making based on the graph data. Data analysis of graph data can be challenging, particularly in the context of automated data analysis of large amounts of data. This is the case as automated data analysis of graph data requires novel techniques able to efficiently explore the graph to extract meaningful information under real-world computation and time constraints. Thus, it would be beneficial to develop techniques directed toward robust and efficient characterization of graph data in support of decision-making.

These facts are disclosed in order to illustrate the technical problem addressed by the present disclosure.

### GENERAL DESCRIPTION

The present disclosure relates to a computer-implemented method, comprising: receiving a graph of nodes and edges; receiving an identification of a starting node in the graph; automatically performing traversal walks on the graph from the starting node, wherein performing each of the traversal walks includes traversing to a randomly selected next node until any of one or more stopping criteria is met; using one or more processors to determine one or more metrics based on the traversal walks; and using at least a portion of the one or more metrics to predict an illicit activity or entity.

In an embodiment for better results, at least one node of the nodes in the graph represents a transaction between different entities.

In an embodiment for better results, at least one edge of the edges in the graph connects two nodes representing different transactions conducted by a single entity.

In an embodiment for better results, at least one node of the nodes in the graph represents an entity that is a party to one or more transactions.

In an embodiment for better results, at least one edge of the edges in the graph connects two nodes representing different entities appearing in a common transaction.

In an embodiment for better results, each node of at least a portion of the nodes in the graph is labeled with a corresponding label identifying an associated transaction or entity as being legitimate or illicit.

In an embodiment for better results, at least one node of the nodes in the graph is unlabeled.

In an embodiment for better results, the method of the present disclosure may further comprise using a machine learning model to determine a label for the at least one unlabeled node.

In an embodiment for better results, one of the one or more stopping criteria is associated with reaching a node that is labeled as illicit.

In an embodiment for better results, one of the one or more stopping criteria is associated with an accumulated score of nodes exceeding a specified threshold.

In an embodiment for better results, one of the one or more stopping criteria is associated with reaching a terminal node from which further traversal is not possible.

In an embodiment for better results, the method of the present disclosure may further comprise recording each traversal walk of the traversal walks that reaches an illicit node as an ordered sequence of nodes, wherein the ordered sequence of nodes begins with the starting node and ends with the illicit node.

In an embodiment for better results, determining the one or more metrics based on the traversal walks includes computing a statistic associated with a distribution of walk sizes generated based on the traversal walks.

In an embodiment for better results, the statistic includes at least one of: a mean, standard deviation, median, or quartile of the distribution of walk sizes.

In an embodiment for better results, wherein the statistic includes a minimum or maximum walk size of the distribution of walk sizes.

In an embodiment for better results, determining the one or more metrics based on the traversal walks includes computing a ratio associated with how frequently walks of the traversal walks reach an illicit node.

In an embodiment for better results, determining the one or more metrics based on the traversal walks includes determining a total number of distinct illicit nodes of the graph reached during the traversal walks.

In an embodiment for better results, using the at least the portion of the one or more metrics to predict the illicit activity or entity includes providing the at least the portion of the one or more metrics to a trained machine learning model, wherein the trained machine learning model outputs a prediction of the illicit activity or entity based on the at least the portion of the one or more metrics and other features that are determined independently of the at least the portion of the one or more metrics.

Another aspect of the present disclosure relates to a system, comprising: one or more processors configured to: receive a graph of nodes and edges; receive an identification of a starting node in the graph; automatically perform traversal walks on the graph from the starting node, wherein the one or more processors are configured to perform each of the traversal walks including by being configured to traverse to a randomly selected next node until any of one or more stopping criteria is met; determine one or more metrics based on the traversal walks; and use at least a portion of the one or more metrics to predict an illicit activity or entity; and a memory coupled to at least one of the one or more processors and configured to provide at least one of the one or more processors with instructions.

Another aspect of the present disclosure relates to a computer program product embodied in a non-transitory computer readable medium and comprising computer instructions for: receiving a graph of nodes and edges; receiving an identification of a starting node in the graph; automatically performing traversal walks on the graph from the starting node, wherein performing each of the traversal walks includes traversing to a randomly selected next node until any of one or more stopping criteria is met; determining one or more metrics based on the traversal walks; and using at least a portion of the one or more metrics to predict an illicit activity or entity.

## BRIEF DESCRIPTION OF THE DRAWINGS

Various embodiments of the invention are disclosed in the following detailed description and the accompanying drawings.

Figure 1 is a diagram illustrating an example of a graph with different types of nodes.

Figure 2 is a block diagram illustrating an embodiment of a framework for using analyzed graph data along with a machine learning model.

Figure 3 is a block diagram illustrating an embodiment of a system for performing graph analysis.

Figure 4 is a flow diagram illustrating an embodiment of a process for determining metrics of a graph based on traversal walks of the graph.

Figure 5 is a flow diagram illustrating an embodiment of a process for handling unlabeled nodes in a graph.

Figure 6 is a flow diagram illustrating an embodiment of a process for automatically performing a traversal walk on a graph from a starting node.

Figure 7 is a functional diagram illustrating a programmed computer system.

## DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

The present disclosure relates to a graph traversal computer-implemented method for measurement of fraudulent nodes, a system and a computer program product embodied in a non-transitory computer readable medium. In particular, to a computer-implemented method, comprising receiving a graph of nodes and edges; receiving an identification of a starting node in the graph; automatically performing traversal walks on the graph from the starting node, wherein performing each of the traversal walks includes traversing to a randomly selected next node until any of one or more stopping criteria is met; using one or more processors to determine one or more metrics based on the traversal walks; and using at least a portion of the one or more metrics to predict an illicit activity or entity.

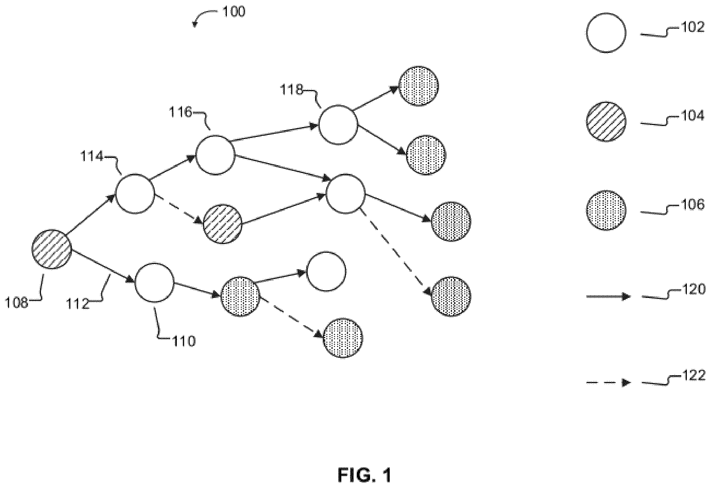

Figure 1 is a diagram illustrating an example of a graph with different types of nodes. A graph refers to a structure comprising a set of objects in which at least some pairs of the objects are related. These objects are referred to as nodes (also called vertices or points) and each of the related pairs of nodes is referred to as an edge (also called a link or line). Oftentimes, a graph is depicted in diagrammatic form as a set of dots or circles for the nodes, joined by lines or curves for the edges (e.g., as shown in Figure 1). In the example illustrated, graph 100 is comprised of a plurality of nodes and edges. Graph 100 is comprised of three different types of nodes (node type 102, node type 104, and node type 106), as well as two different edge types (edge type 120 and edge type 122), which are described in further detail below. This example is illustrative and not restrictive. Different graphs with different node type and edge type compositions are also possible. Examples of nodes in graph 100 are nodes 108 and 110. An example of an edge is edge 112, which connects nodes 108 and 110. Edge 112 is an example of a directed edge (shown diagrammatically as an arrow from node 108 to 110). This may represent a temporal sequence in which node 108 comes before node 110. Edges may also represent properties other than temporal sequence. It is also possible for edges to be undirected or bidirectional depending on the context.

In some embodiments, graph 100 is analyzed to aid detection of money laundering or other forms of fraud. Money laundering is a financial crime that involves the illegal process of obtaining money from criminal activities, such as drug or human trafficking, and making it appear legitimate. In a money laundering (or other fraud) context, in some embodiments, graph 100 represents a transaction network. In other embodiments, graph 100 represents an entity network.

In a transaction network scenario, nodes in graph 100 represent individual transactions and edges connect transactions that share common entities. Examples of transactions include a sale, a purchase, or another type of exchange or interaction. Examples of entities include a person, a business, a governmental group, an account, etc. Entities can take on various roles (e.g., as merchants, clients, etc.). In various embodiments, because connecting all transactions that share common entities results in very dense graphs, transactions are only connected if they occur in a specified time-window (e.g., only connect two transactions if they occurred within a 24-hour period). In addition, in some embodiments and as illustrated in Figure 1, edge direction is used to encode the temporal sequence of transactions, with edges connecting older transactions to more recent transactions. Timing of transactions can be determined based on timestamps, which are digital records of the time of occurrence of particular events (e.g., as recorded by computers or other electronic devices). It is also possible to connect nodes using bidirectional edges (e.g., to represent two transactions as occurring within a same timestamp). In addition, in some embodiments, and as illustrated in Figure 1, edges may be of different types. Different edges can correspond to different entity types in the data (e.g., entity types could be payment card, payment device, IP address, etc.). For example, an edge of type 'card' could connect two transactions that share the same payment card, while an edge of type 'device' could connect two transactions that share the same device.

In an entity network scenario, nodes in graph 100 represent entities, such as merchants or clients, and edges connect entities that appear in the same transaction. When the same two entities are parties to multiple transactions (e.g., a person making several purchases at a certain retail store), the information of all the transactions may be aggregated into a single edge, and information about the individual transactions (e.g., number of transactions, average amount, maximum amount etc.) may be included in the features of the respective edge. Entity networks can be directed, as illustrated in Figure 1 (e.g., a directed edge from account A to account B indicating the direction of the flow of money). Edges may also be undirected (e.g., an undirected edge recording that a customer made a purchase with a certain device).

In some embodiments, each node in graph 100 is categorized as either "legitimate", "illicit", or "unknown". For example, in graph 100, node type 102, node type 104, and node type 106 can correspond to the "legitimate", "illicit", and "unknown" categories, respectively. It is also possible for there to be only two types of nodes: "legitimate" and "illicit", such as in scenarios in which ground truth labels are available for all nodes or in scenarios in which it is possible to determine or estimate labels for all nodes. In some embodiments, the determination as to whether a node (corresponding to a transaction or an entity) is legitimate or illicit is based on a category of the entity associated with the node. For example, a transaction node can be categorized as legitimate if the entity making the transaction associated with the node falls within a legitimate category. For example, within a cryptocurrency context, examples of legitimate categories may include exchanges, wallet providers, miners, and financial service providers. Examples of illicit categories may include scams, malware, terrorist organizations, and Ponzi schemes. An entity node can similarly be categorized as legitimate or illicit based on the above categories. In some embodiments, in a transaction graph scenario, the determination as to whether a node is legitimate or illicit is based on the label of the entities associated with that node. Stated alternatively, the data may include labels for the edges instead of the nodes. Mapping the labels from edges to nodes can be accomplished by marking a node as illicit if it is connected by at least one illicit edge. For example, within a banking context, two transactions that are using the same illicit entity (e.g., an illicit payment card, device, etc.) can be represented as two nodes connected by an illicit edge, and can therefore both be categorized as illicit. In various embodiments, illicit connections are utilized (e.g., whether a transaction partner is connected to an illicit actor, such as someone associated with money laundering in the past or other criminal activity) to aid detection of money laundering or other fraud.

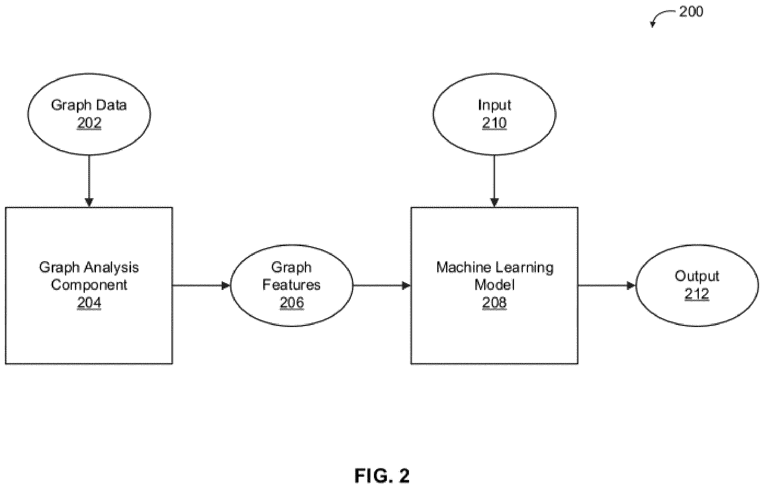

In various embodiments, as described in further detail herein, a distance from a specified node (corresponding to a transaction or entity of interest) to an illicit node is measured to predict a likelihood of money laundering or other fraud associated with the specified node. In various embodiments, the specified node is selected as a starting node from which traversal walks of a graph are performed. In various embodiments, each traversal walk starts from the selected starting node and proceeds to a next directly connected node selected at random, continuing until an illicit node is reached or no more steps are possible or another stopping criteria is reached. These traversals are referred to as random walks. An example of a random walk for graph 100 would be (assuming node 118 is the starting node) the ordered sequence of nodes: node 118, node 116, node 114, and node 108 (node 108 being a stopping point because it is an illicit node). In various embodiments, a number of steps to reach the illicit node is recorded (e.g., three steps for the above random walk from node 118 to node 108). In various embodiments, this process is repeated to generate a distribution over the number of steps of traversals upon which various statistics such as means, standard deviations, quantiles, etc. can be computed and extracted as features to be utilized to aid money laundering or other fraud detection. These graph-extracted features may be utilized in conjunction with other features associated with a transaction or entity that is being analyzed for money laundering, other fraud, etc. Such a framework is described in more detail in Figure 2. These graph-extracted features can also be used to train a machine learning model (or used within a rule-based framework) for detecting money laundering or other fraud (e.g., if the mean distance to an illicit node is two or fewer steps, then flag a transaction as suspicious and/or requiring review).

A random walk process is computationally beneficial and efficient because it is typically not possible to explore every single connection in a graph, particularly for large and/or dense graphs. A random walk process allows for efficient sampling of all available paths. Furthermore, as described in further detail herein, stopping criteria can be applied to further promote computational efficiency. Random walks can be performed regardless of whether an underlying graph is transaction-based (a transaction network) or entity-based (an entity network). In the money laundering application context, transaction data is oftentimes collected and then analyzed offline (not in real time) because a real-time decision is not required in this context.

Figure 2 is a block diagram illustrating an embodiment of a framework for using analyzed graph data along with a machine learning model. In the example illustrated, framework 200 includes graph analysis component 204 analyzing graph data 202 to extract graph features 206, which are inputted to machine learning model 208. Machine learning model 208 uses graph features 206 along with input 210 to determine output 212.

In various embodiments, graph data 202 is comprised of transaction data in graph form. Graph 100 of Figure 1 is an example of graph data that may be included in graph data 202. Graph data 202 can include graphs in which nodes represent transactions and/or graphs in which nodes represent entities. In various embodiments, nodes and edges of graphs included in graph data 202 are labeled. For example, nodes may be labeled as legitimate or illicit.

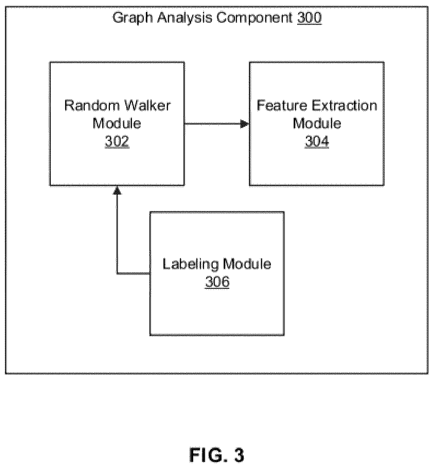

In the example illustrated, graph analysis component 204 receives graph data 202. In various embodiments, graph analysis component 204 performs random walks for a given transaction graph and derives various metrics based on the random walks. Figure 3 illustrates an example structure for graph analysis component 204. In the example shown in Figure 3, the example structure includes random walker module 302, feature extraction module 304, and labeling module 306. The various modules may be different software or hardware sub-units.

In various embodiments, a random walker module (e.g., random walker module 302 of Figure 3), receives a transaction graph, a set of seed nodes, and a parameter specifying a number of desired random walks for each of the seed nodes. Other parameters may also be received. The random walker module samples random walks for each seed node. In various embodiments, due to the graph being temporal in nature, graph traversal is limited to traveling backward in time (to past nodes) and traversal stops at a first illicit node found or when there are no more valid nodes to visit. In various embodiments, a feature extraction module (e.g., feature extraction module 304 of Figure 3) receives the random walks for the set of seed nodes and computes aggregated features that summarize the random walks, e.g., average number of steps needed to reach one illicit node, total number of different illicit nodes found, and so forth. Various other metrics are typically also computed. The random walker module relies on labels in graph data 202 to determine illicit node stopping points. In some embodiments in which labels are missing, a labeling module (e.g., labeling module 306 of Figure 3) estimates labels for nodes (e.g., using a machine learning or a rules-based approach). The random walker, feature extraction, and labeling modules are described in further detail below (e.g., see Figure 3).

In various embodiments, the output of the feature extraction module is graph features 206. Graph features 206 can include various features associated with random walk size. Stated alternatively, graph features 206 can include various metrics based on traversal walks and related to distance between seed nodes and found illicit nodes. These metrics are described in further detail below (e.g., see Figure 3). Within framework 200, graph features 206 are utilized by machine learning model 208 in conjunction with input 210. Graph features 206 can be used to enrich input data of input 210 to improve the performance of machine learning model 208. In various embodiments, machine learning model 208 is configured to predict whether a given transaction is associated with money laundering or other fraud. Within this context, data included in input 210 may be various properties associated with the given transaction to be analyzed for money laundering or other fraud. Examples of these properties include transaction amount, transaction time, date, and location, etc. Graph features 206 can enrich input 210, for example, by providing information regarding how an entity associated with the given transaction is connected to illicit actors via a node distance metric corresponding to a distance between the entity and the closest illicit actor. In various embodiments, graph features 206 and input 210 are encoded as numerical vectors. Non-numerical properties of input 210 can be converted to numerical representations.

Machine learning model 208 determines output 212 based on graph features 206 and input 210. For a given transaction, in various embodiments, output 212 includes a binary (yes or no) determination (e.g., 0 or 1 result) as to whether the given transaction is associated with money laundering or other fraud. Forms of fraud other than money laundering include account takeover, account-opening fraud, identity theft, and so forth. It is also possible for output 212 to take the form of a score (e.g., indicating a probability of money laundering or other fraud). Output 212 can also include an analysis of various features utilized by machine learning model 208 that contributed to a money laundering or other fraud prediction by machine learning model 208 (e.g., indicating which features contributed most to the prediction). Graph features 206 may also be utilized by a graph visualization tool that also displays output 212 to a human analyst. Visualization of graph features 206 can provide the human analyst with more information with which to review the given transaction or entity. Machine learning model 208 is a model that is built based on sample data (training data) in order to make its predictions or decisions without being explicitly programmed to do so. Various architectures are possible for machine learning model 208. In some embodiments, machine learning model 208 is a random forest model. It is also possible for machine learning model 208 to utilize a neural network or other types of architectures.

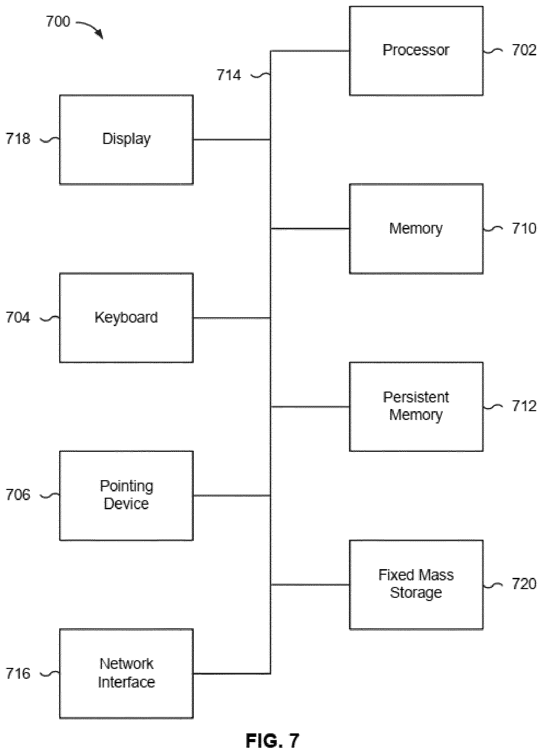

Figure 3 is a block diagram illustrating an embodiment of a system for performing graph analysis. In some embodiments, graph analysis component 300 is graph analysis component 204 of Figure 2. In the example illustrated, graph analysis component 300 includes random walker module 302, feature extraction module 304, and labeling module 306. In some embodiments, graph analysis component 300 (including its sub-components) is comprised of computer program instructions that are executed on a general-purpose processor, e.g., a central processing unit (CPU), of a programmed computer system. Figure 7 illustrates an example of a programmed computer system. It is also possible for the logic of graph analysis component 300 to be executed on other hardware, e.g., executed using an application-specific integrated circuit (ASIC) or a field programmable gate array (FPGA).

In various embodiments, random walker module 302 performs traversal walks on a received graph (e.g., graph 100 of Figure 1). The nodes in the received graph can correspond to transactions. The nodes can also correspond to entities. In some embodiments, random walker module 302 receives as input an original transaction graph $G$, a list of seed nodes, $S \subset V(G)$, and a number of successful random walks desired, $k$. Successful random walks are described below. Random walker module 302's output for each seed node $s \in S$ is a list of sampled random walks $X^S = \{X_1^S, X_2^S, ..., X_k^S\}$. A random walk $X_i^S$ has a sequence of nodes $X_i^S = (x_1, x_2, ..., x_n)$, (Equation 1) such that $x_1 = s$. In many scenarios, due to the temporal nature of the graph, random walker module 302 only traverses backward in time. Stated alternatively, it only traverses from node $x_i$ to node $x_j$ if $x_j$ represents a transaction older than $x_i$ (this will be referred to as the 'all backwards scenario'). For example, in a transaction network scenario, the network can be represented as a directed graph connecting older nodes to newer nodes by an edge directed from the older to the newer node. In such a transaction network, this means that (for a next node) only incoming neighbor nodes, with a timestamp lower than the timestamp of the current node, can be selected. In many scenarios, random walker module 302 can traverse to all nodes that are older than the seed node. Stated alternatively, it only traverses from node $x_i$ to node $x_j$ if $x_j$ represents a transaction older than s (this will be referred to as the 'seed backwards scenario'). Node $x_j$ could therefore be either in the past or in the future relative to node $x_i$ in the seed backwards scenario. To avoid endless loops in this scenario, the same node cannot be chosen more than once in the same random walk.

In various embodiments, during a random walk, to select a next node after a current node, random walker module 302 selects a node uniformly at random from the eligible neighbors of the current node. In the 'all backwards scenario' described above, random walker module 302 selects a node uniformly at random from the incoming neighbors of the current node. Because edges only connect older transactions to newer transactions, there is always an end node in any random walk, which means that random walker module 302 will not be stuck in an endless loop. In the 'seed backwards scenario' described above, random walker module 302 selects a node uniformly at random from all neighbors (incoming and outgoing) of the current node, provided that they are older than the seed node s and have not yet been selected in the current random walk, again avoiding endless loops. For a given state of a random walk $X_i^S = (s = x_1, x_2, ..., x_n)$, the random walk stops and returns $X_i^S$ as the final random walk if a stopping criterion is met. In some embodiments, the random walk stops if at least one of the following criteria is met: 1) $x_n$ is a known illicit node (corresponding to a known illicit transaction or entity) or 2) the set of eligible nodes to select from is empty (for example, in the 'all backwards scenario' described above, such a scenario occurs when a given node has no incoming neighbors and, consequently, random walker module 302 has no possible moves). In addition, in some embodiments, the random walk also stops if a maximum walk size (an adjustable parameter) has been reached. The maximum walk size parameter is useful to avoid being stuck in large walks and, thus, reduces computation time, particularly when performing many random walks for each seed. After a node is selected, if no stopping criteria is met, then random walker module 302 randomly picks a next node to add to $X_i^S$ and the random walk continues.

The number of successful random walks parameter (e.g., supplied as a user input) sets a desired number of random walks ending in an illicit node from each seed node s E S. Unsuccessful random walks are possible because, as discussed above, random walker module 302 may encounter a node with no eligible neighbors and finish traversing a graph without reaching an illicit node. In various embodiments, to ensure the number of desired successful random walks is reached, random walker module 302 performs as many random walks as needed. As described below, a feature (metric) that can be extracted is the fraction of successful random walks from the total number of random walks needed to reach the number of successful random walks. This is also indicative of the number of unsuccessful random walks, which may be informative. In some scenarios, some nodes in a graph might have no paths to any illicit node. Thus, it is impossible to obtain successful random walks for those nodes. To avoid this problem, random walker module 302 can first determine which nodes can actually reach an illicit node. One way to do this is to invert the direction of the graph and use a descendant search algorithm for directed acyclic graphs to return all nodes reachable from a source node s in the graph G. Afterwards, the reachable nodes can be inspected to determine if at least one of them is illicit. This can be done for all nodes in a graph, and only those that can reach an illicit node are allowed to be seed nodes.

In various embodiments, feature extraction module 304 extracts features (also referred to as metrics) based on random walks performed by random walker module 302. In various embodiments, feature extraction module 304 receives a list of random walks for each seed node and returns a data frame of features, corresponding to the transaction or entity associated with the seed node, summarizing the random walks. Examples of features that can be obtained are: 1) minimum size of the random walks (min); 2) maximum size of the random walks (max); 3) mean size of the random walks (mean); 4) standard deviation of the random walks sizes (std); 5) median size of the random walks (median); 6) first quartile of the random walks sizes (q25); 7) third quartile of the random walks sizes (q75); 8) fraction of successful random walks from all the random walks performed (hit rate, i.e., percentage of random walks that ended in an illicit node); and 9) number of distinct illicit nodes in the random walks (illicit) as well as the number of legitimate nodes. For example, from a specified seed node, if 100 random walks are performed and 30 reached an illicit node, the hit rate would be 30%. Among those 100 walks, a minimum walk size to reach an illicit node, a maximum walk size to reach an illicit node, corresponding mean, standard deviation, median, quartiles, and number of illicit nodes found would also be computable. It is also possible to report which nodes have no possible path to an illicit node. Features 1) through 7) can be considered distance metrics because they are based on measuring the number of steps to reach an illicit node from the seed node.

In some scenarios, nodes are labeled with scores indicating likelihoods of being illicit (instead of binary legitimate or illicit classifications). In these scenarios, these likelihood scores can be added up during random walks, and a cumulative score for each random walk can be recorded. Minimum score, maximum score, mean score, standard deviation, median score, first quartile, and third quartile metrics can be computed based on likelihood scores. Nodes with scores above a specified threshold (indicating a specified likelihood of being illicit) can be used as stopping points for random walks, or a stopping criterion can be used where a stopping point occurs when the accumulated scores of all nodes in the current random walk exceed a specific threshold. This allows the hit rate and number of distinct illicit nodes metrics to be calculated in the same way as described above.

In some embodiments, labeling module 306 supplies node labels to random walker module 302. This can occur when node labels are missing from a graph that random walker module 302 receives. In some embodiments, nodes of node type 106 in Figure 1 are nodes missing labels. Because terminating a successful random walk depends on reaching a node known to be illicit, labels indicating which nodes are legitimate and illicit are needed. In many scenarios, labeling module 306 is not needed because human-generated labels are available for all nodes (e.g., when there is sufficient time for human analysts to review and label nodes). But there may be scenarios in which a node has been recently added for which a label is not yet available (e.g., a new entity is added and there has not been time to review the entity). In order to avoid a significant lag in analyzing a graph with such a recently added and unlabeled node, various approaches can be adopted. In some embodiments, labeling module 306 utilizes a machine learning model that is trained to predict labels for recent nodes that do not have labels. Such a machine learning model may be a neural network model that relies on various node properties (e.g., profession, location, etc. of an entity for an entity node or transaction amount, location, etc. for a transaction node) to determine whether a node is likely to be legitimate or illicit. Machine learning model generated labels can be considered soft or pseudo-labels to be used until ground truth labels created by a human analyst are available. Another approach is to temporarily label new nodes as legitimate by default. It is also possible to utilize a rules-based approach (without using a machine learning model) to generate labels. For example, if a transaction amount is more than a specified threshold and/or an entity is from a specified list of countries, then the corresponding node may be labeled as suspicious and act as a stopping point in a random walk. It is also possible to use human labelers to generate labels.

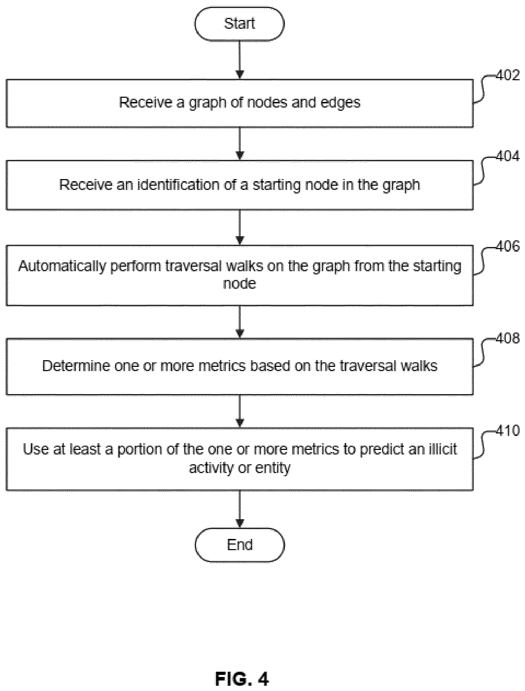

Figure 4 is a flow diagram illustrating an embodiment of a process for determining metrics of a graph based on traversal walks of the graph. In some embodiments, at least a portion of the process of Figure 4 is performed by graph analysis component 204 of Figure 2 and/or graph analysis component 300 of Figure 3.

At 402, a graph of nodes and edges is received. An example of a type of graph that may be received is graph 100 of Figure 1. In some embodiments, the graph represents a network of transactions. Stated alternatively, each node in such a graph represents a transaction and edges connect nodes whose transactions share common entities conducting the transactions. In other embodiments, the graph represents a network of entities. Stated alternatively, each node in such a graph represents a specific entity (e.g., a person, business organization, etc.) and edges connect nodes whose entities share a common transaction. In some embodiments, the graph is received by random walker module 302 of Figure 3.

At 404, an identification of a starting node in the graph is received. The starting node is also referred to as a seed node. In some embodiments, the identification of the starting node is provided by a user. The starting node can be a node that the user desires a prediction as to whether it is legitimate or illicit. In various embodiments, the starting node is one of a plurality of starting nodes provided. Stated alternatively, a set of seed nodes may be provided, from which one seed node at a time is utilized. In some embodiments, the identification of the starting node is received by random walker module 302 of Figure 3.

At 406, traversal walks on the graph from the starting node are automatically performed. Beginning from the starting node, subsequent nodes are selected automatically and randomly without user input. In various embodiments, performing each of the traversal walks includes traversing to a randomly selected next node until any of one or more stopping criteria is met. Examples of stopping criteria include: 1) reaching a node labeled as illicit; 2) not being able to traverse to any more nodes; and 3) reaching a maximum walk size. In various embodiments, for each successful walk (random walk that ends in reaching an illicit node), the path of the random walk in the form of a list of nodes traversed is generated. In some embodiments, the traversal walks are performed by random walker module 302 of Figure 3. In various embodiments, the lists of nodes traversed for the traversal walks are transmitted to feature extraction module 304 for analysis.

At 408, one or more metrics are determined based on the traversal walks. In some embodiments, each traversal walk is encoded as a sequence of nodes. The length of the sequence of nodes (the number of nodes in the sequence) corresponds to a distance between the starting node and an ending node, which can be considered a size of a random walk. In various embodiments, successful walks (random walks that reach an illicit node) are compiled into a distribution of successful walks to compute various metrics associated with traversal walk size, such as maximum size, minimum size, average size, size standard deviation, size quartiles, and median size. Successful walks can also be analyzed to determine how many distinct illicit nodes were found (unsuccessful walks would not be needed because they would not include illicit nodes). In various embodiments, unsuccessful walks (random walks that do not reach an illicit node) are used to compute metrics such as fraction of successful walks (out of a total number of walks), ratio of successful to unsuccessful walks, etc. In some embodiments, the one or more metrics are determined by feature extraction module 304 of Figure 3.

At 410, at least a portion of the one or more metrics are used to predict an illicit activity or entity. In some embodiments, the one or more metrics are transmitted to a machine learning model (e.g., machine learning model 208 of Figure 2) that predicts the illicit activity or entity based on at least some of the one or more metrics and additional inputs to the machine learning model. For example, the machine learning model may predict whether a specific activity (e.g., a specific purchase transaction between a buyer and seller) is illicit. The specific purchase transaction may be associated with a seller corresponding to the starting node in the graph. The one or more metrics can include distance metrics (e.g., mean distance from the starting node to an illicit node corresponding to an illicit actor) that can aid the machine learning model in determining whether the specific purchase transaction is illicit. The machine learning model may also be tasked with directly determining whether a specific entity is illicit based on distance metrics corresponding to how closely the specific entity is to illicit actors (in terms of node distances in a graph in which the specific entity corresponds to the starting node).

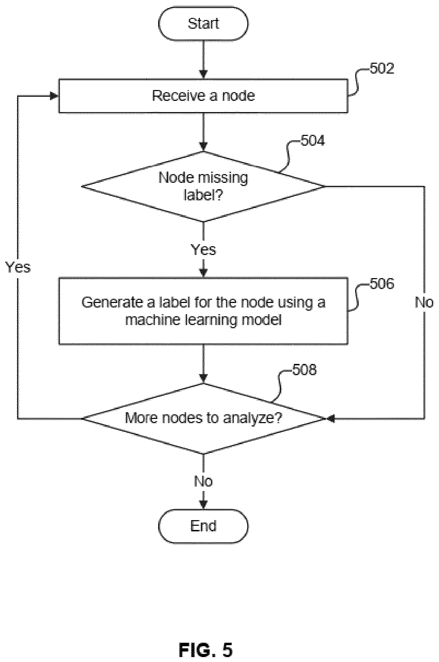

Figure 5 is a flow diagram illustrating an embodiment of a process for handling unlabeled nodes in a graph. In some embodiments, the process of Figure 5 is performed by graph analysis component 300 of Figure 3. In some embodiments, at least a portion of the process of Figure 5 is performed in 402 of Figure 4.

At 502, a node is received. In some embodiments, the node is one of multiple nodes received by random walker module 302 of Figure 3.

At 504, it is determined whether the node is missing a label. If at 504 it is determined that the node is not labeled, at 506, a label for the node is generated using a machine learning model (e.g., a neural network model as discussed with respect to labeling module 306 of Figure 3). It is also possible to use labeling approaches that do not rely on a machine learning model (e.g., rules-based approaches). If at 504 it is determined that the node is labeled, 506 is not performed.

At 508, it is determined whether there are more nodes to analyze. If at 508 it is determined that there are more nodes to analyze, at 502, another node is received in order to determine whether that node is labeled. If at 508 it is determined that there are no more nodes to analyze, then no further action is taken.

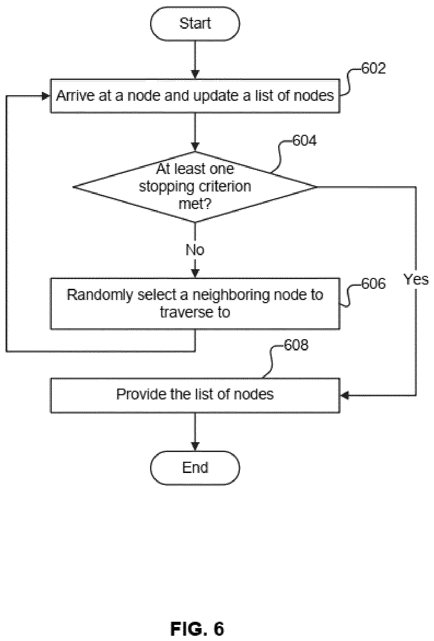

Figure 6 is a flow diagram illustrating an embodiment of a process for automatically performing a traversal walk on a graph from a starting node. In various embodiments, the traversal walk performed is one of a plurality of traversal walks performed in order to generate a distribution of traversal walks. In some embodiments, the process of Figure 6 is performed by random walker module 302 of Figure 3. In some embodiments, at least a portion of the process of Figure 6 is performed in 406 of Figure 4.

At 602, a node is arrived at and a list of nodes is updated. The node may be a starting node of a sequence of nodes, an ending node in the sequence of nodes, or an intermediate node in a path of nodes from the starting node to the ending node. The list of nodes is a running sequence of nodes beginning with the starting node. The list of nodes is updated to include the node that is arrived at, and the list of nodes is continually updated until after the ending node is reached. The ending node is reached if at least one stopping criterion is met.

At 604, it is determined whether at least one stopping criterion is met. An example of a stopping criterion is the node that is arrived at being an illicit node. Another example of a stopping criterion is the node that is arrived at being a terminal node (that is not an illicit node) that has no eligible neighboring nodes. If at 604 it is determined that no stopping criterion has been met, at 606, a neighboring node to traverse to is randomly selected. In various embodiments, the random selection is uniform in the sense that each eligible neighboring node has an equal probability of being selected. The neighboring node that is randomly selected then becomes the next arrival node at 602. The list of nodes is updated to reflect the addition of the randomly selected neighboring node to the sequence of nodes from the starting node to the ending node.

If at 604 it is determined that a stopping criterion has been met, at 608, the list of nodes is provided. Meeting the stopping criterion causes the traversal walk to terminate. In some embodiments, the list of nodes, which describes the sequence of nodes visited in the traversal walk, is transmitted to feature extraction module 304 of Figure 3.

Figure 7 is a functional diagram illustrating a programmed computer system. In some embodiments, processes associated with framework 200 of Figure 2 and/or graph analysis component 300 of Figure 3 are executed by computer system 700. In some embodiments, the processes of Figures 4, 5, and/or 6 are executed by computer system 700.

In the example shown, computer system 700 includes various subsystems as described below. Computer system 700 includes at least one microprocessor subsystem (also referred to as a processor or a central processing unit (CPU)) 702. Computer system 700 can be physical or virtual (e.g., a virtual machine). For example, processor 702 can be implemented by a single-chip processor or by multiple processors. In some embodiments, processor 702 is a general-purpose digital processor that controls the operation of computer system 700. Using instructions retrieved from memory 710, processor 702 controls the reception and manipulation of input data, and the output and display of data on output devices (e.g., display 718).

Processor 702 is coupled bi-directionally with memory 710, which can include a first primary storage, typically a random-access memory (RAM), and a second primary storage area, typically a read-only memory (ROM). As is well known in the art, primary storage can be used as a general storage area and as scratch-pad memory, and can also be used to store input data and processed data. Primary storage can also store programming instructions and data, in the form of data objects and text objects, in addition to other data and instructions for processes operating on processor 702. Also, as is well known in the art, primary storage typically includes basic operating instructions, program code, data, and objects used by processor 702 to perform its functions (e.g., programmed instructions). For example, memory 710 can include any suitable computer-readable storage media, described below, depending on whether, for example, data access needs to be bi-directional or uni-directional. For example, processor 702 can also directly and very rapidly retrieve and store frequently needed data in a cache memory (not shown).

Persistent memory 712 (e.g., a removable mass storage device) provides additional data storage capacity for computer system 700, and is coupled either bi-directionally (read/write) or uni-directionally (read only) to processor 702. For example, persistent memory 712 can also include computer-readable media such as magnetic tape, flash memory, PC-CARDS, portable mass storage devices, holographic storage devices, and other storage devices. A fixed mass storage 720 can also, for example, provide additional data storage capacity. The most common example of fixed mass storage 720 is a hard disk drive. Persistent memory 712 and fixed mass storage 720 generally store additional programming instructions, data, and the like that typically are not in active use by the processor 702. It will be appreciated that the information retained within persistent memory 712 and fixed mass storage 720 can be incorporated, if needed, in standard fashion as part of memory 710 (e.g., RAM) as virtual memory.

In addition to providing processor 702 access to storage subsystems, bus 714 can also be used to provide access to other subsystems and devices. As shown, these can include a display monitor 718, a network interface 716, a keyboard 704, and a pointing device 706, as well as an auxiliary input/output device interface, a sound card, speakers, and other subsystems as needed. For example, pointing device 706 can be a mouse, stylus, track ball, or tablet, and is useful for interacting with a graphical user interface.

Network interface 716 allows processor 702 to be coupled to another computer, computer network, or telecommunications network using a network connection as shown. For example, through network interface 716, processor 702 can receive information (e.g., data objects or program instructions) from another network or output information to another network in the course of performing method/process steps. Information, often represented as a sequence of instructions to be executed on a processor, can be received from and outputted to another network. An interface card or similar device and appropriate software implemented by (e.g., executed/-performed on) processor 702 can be used to connect computer system 700 to an external network and transfer data according to standard protocols. Processes can be executed on processor 702, or can be performed across a network such as the Internet, intranet networks, or local area networks, in conjunction with a remote processor that shares a portion of the processing. Additional mass storage devices (not shown) can also be connected to processor 702 through network interface 716.

An auxiliary I/O device interface (not shown) can be used in conjunction with computer system 700. The auxiliary I/O device interface can include general and customized interfaces that allow processor 702 to send and, more typically, receive data from other devices such as microphones, touch-sensitive displays, transducer card readers, tape readers, voice or handwriting recognizers, biometrics readers, cameras, portable mass storage devices, and other computers.

In addition, various embodiments disclosed herein further relate to computer storage products with a computer readable medium that includes program code for performing various computer-implemented operations. The computer-readable medium is any data storage device that can store data which can thereafter be read by a computer system. Examples of computer-readable media include, but are not limited to, all the media mentioned above: magnetic media such as hard disks, floppy disks, and magnetic tape; optical media such as CD-ROM disks; magneto-optical media such as optical disks; and specially configured hardware devices such as application-specific integrated circuits (ASICs), programmable logic devices (PLDs), and ROM and RAM devices. Examples of program code include both machine code, as produced, for example, by a compiler, or files containing higher level code (e.g., script) that can be executed using an interpreter.

The computer system shown in Figure 7 is but an example of a computer system suitable for use with the various embodiments disclosed herein. Other computer systems suitable for such use can include additional or fewer subsystems. In addition, bus 714 is illustrative of any interconnection scheme serving to link the subsystems. Other computer architectures having different configurations of subsystems can also be utilized.

Although the foregoing embodiments have been described in some detail for purposes of clarity of understanding, the invention is not limited to the details provided. There are many alternative ways of implementing the invention. The disclosed embodiments are illustrative and not restrictive.

An embodiment 1 discloses a computer-implemented method, comprising:

receiving a graph of nodes and edges;
receiving an identification of a starting node in the graph;
automatically performing traversal walks on the graph from the starting node, wherein performing each of the traversal walks includes traversing to a randomly selected next node until any of one or more stopping criteria is met;
using one or more processors to determine one or more metrics based on the traversal walks; and
using at least a portion of the one or more metrics to predict an illicit activity or entity.

An embodiment 2 includes the method according to embodiment 1, wherein at least one node of the nodes in the graph represents a transaction between different entities.

An embodiment 3 includes the method according to any of the embodiments 1-2, wherein at least one edge of the edges in the graph connects two nodes representing different transactions conducted by a single entity.

An embodiment 4 includes the method according to any of the embodiments 1-3, wherein at least one node of the nodes in the graph represents an entity that is a party to one or more transactions.

An embodiment 5 includes the method according to any of the embodiments 1-4, wherein at least one edge of the edges in the graph connects two nodes representing different entities appearing in a common transaction.

An embodiment 6 includes the method according to any of the embodiments 1-5, wherein each node of at least a portion of the nodes in the graph is labeled with a corresponding label identifying an associated transaction or entity as being legitimate or illicit.

An embodiment 7 includes the method according to any of the embodiments 1-6, wherein at least one node of the nodes in the graph is unlabeled; preferably further comprising using a machine learning model to determine a label for the at least one unlabeled node.

An embodiment 8 includes the method according to any of the embodiments 1-7, wherein one of the one or more stopping criteria is associated with reaching a node that is labeled as illicit; and/or one of the one or more stopping criteria is associated with an accumulated score of nodes exceeding a specified threshold; and/or one of the one or more stopping criteria is associated with reaching a terminal node from which further traversal is not possible.

An embodiment 9 includes the method according to any of the embodiments 1-8 further comprising recording each traversal walk of the traversal walks that reaches an illicit node as an ordered sequence of nodes, wherein the ordered sequence of nodes begins with the starting node and ends with the illicit node.

An embodiment 10 includes the method according to any of the embodiments 1-9, wherein determining the one or more metrics based on the traversal walks includes computing a statistic associated with a distribution of walk sizes generated based on the traversal walks.

An embodiment 11 includes the method according to the embodiment 10, wherein the statistic includes at least one of: a mean, standard deviation, median, or quartile of the distribution of walk sizes; and/or wherein the statistic includes a minimum or maximum walk size of the distribution of walk sizes.

An embodiment 12 includes the method according to any of the embodiments 1-11, wherein determining the one or more metrics based on the traversal walks includes computing a ratio associated with how frequently walks of the traversal walks reach an illicit node; preferably wherein determining the one or more metrics based on the traversal walks includes determining a total number of distinct illicit nodes of the graph reached during the traversal walks.

An embodiment 13 includes the method according to any of the embodiments 1-12, wherein using the at least the portion of the one or more metrics to predict the illicit activity or entity includes providing the at least the portion of the one or more metrics to a trained machine learning model, wherein the trained machine learning model outputs a prediction of the illicit activity or entity based on the at least the portion of the one or more metrics and other features that are determined independently of the at least the portion of the one or more metrics.

An embodiment 14 includes a system, comprising:

one or more processors configured to:

receive a graph of nodes and edges;
receive an identification of a starting node in the graph;
automatically perform traversal walks on the graph from the starting node, wherein the one or more processors are configured to perform each of the traversal walks including by being configured to traverse to a randomly selected next node until any of one or more stopping criteria is met;
determine one or more metrics based on the traversal walks; and
use at least a portion of the one or more metrics to predict an illicit activity or entity; and a memory coupled to at least one of the one or more processors and configured to provide at least one of the one or more processors with instructions.

An embodiment 15 includes a computer program product embodied in a non-transitory computer readable medium and comprising computer instructions for:

receiving a graph of nodes and edges;
receiving an identification of a starting node in the graph;
automatically performing traversal walks on the graph from the starting node, wherein performing each of the traversal walks includes traversing to a randomly selected next node until any of one or more stopping criteria is met;
determining one or more metrics based on the traversal walks; and using at least a portion of the one or more metrics to predict an illicit activity or entity.

The disclosure should not be seen in any way restricted to the embodiments described and a person with ordinary skill in the art will foresee many possibilities to modifications thereof.

The above-described embodiments are combinable.

The following claims further set out particular embodiments of the disclosure.

**Claims**

1.  A computer-implemented method for training a machine-learning model, comprising:

receiving a graph of nodes and edges representing a transaction network;
receiving an identification of a starting node in the graph;
automatically performing traversal walks on the graph from the starting node,
wherein performing each of the traversal walks includes traversing to a randomly selected next node until any of one or more stopping criteria is met;
using multiple processors to determine one or more metrics based on the traversal walks; and
using at least a portion of the one or more metrics to train a machine learning model to predict an activity or entity of interest;

wherein at least one node of the nodes in the graph represents an entity that is a party to one or more transactions;

wherein at least one edge of the edges in the graph connects two nodes representing different entities appearing in a common transaction;

wherein determining the one or more metrics based on the traversal walks includes computing a statistic associated with a distribution of walk sizes generated based on the traversal walks;

wherein the one or more stopping criteria include: reaching a node that is labeled as of interest, not being able to traverse to any more nodes, and reaching a maximum walk size;

wherein using the at least the portion of the one or more metrics to train the machine learning model to predict the activity or entity of interest includes training the machine learning model to be trained with the at least the portion of the one or more metrics, wherein the machine learning model when trained outputs a prediction of the activity or entity of interest based on the at least the portion of the one or more metrics; wherein the randomly selected next node is selected uniformly at random;

wherein determining the one or more metrics includes computing a ratio associated with how frequently walks of the traversal walks reach an node associated with an activity or entity of interest;

wherein the machine learning model is a neural network;

wherein the method further comprises the following process, wherein at least a portion of the following process is performed when receiving the graph of nodes and edges representing the transaction network:

a) receiving a node of the graph of nodes and edges;

b) determining whether the received node is missing a label;

c) if, and only if, it is determined that the received node is not labeled, generating a label for the received node using a neural network machine learning model;

d) determining whether there are more nodes to analyze;

e) if it is determined that there are more nodes to analyze, receiving another node to determine whether that node is labeled by repeating steps from (a);

f) if it is determined that there are no more nodes to analyze, then no further action is taken;

wherein said computer-implemented method for training a machine-learning model, uses a computer system including at least one microprocessor subsystem implemented by multiple processors.

2. The method according to the previous claim, wherein at least one node of the nodes in the graph represents a transaction between different entities.

3. The method according to any of the previous claims, wherein at least one edge of the edges in the graph connects two nodes representing different transactions conducted by a single entity.

4. The method according to any of the previous claims, wherein each node of at least a portion of the nodes in the graph is labeled with a corresponding label identifying an associated transaction or entity as being of interest or not of interest.

5. The method according to any of the previous claims, wherein at least one node of the nodes in the graph is unlabeled.

6. The method according to the previous claim, further comprising using a machine learning model to determine a label for the at least one unlabeled node.

7. The method according to any of the previous claims, wherein one of the one or more stopping criteria is associated with reaching a terminal node from which further traversal is not possible.

8. The method according to any of the previous claims, further comprising recording each traversal walk of the traversal walks that reaches a node of interest as an ordered sequence of nodes, wherein the ordered sequence of nodes begins with the starting node and ends with the node of interest.

9. The method according to the claim 1, wherein the statistic includes at least one of: a mean, standard deviation, median, or quartile of the distribution of walk sizes.

10. The method according to claim 1 or 9 wherein the statistic includes a minimum or maximum walk size of the distribution of walk sizes.

11. The method according to the previous claim wherein determining the one or more metrics based on the traversal walks includes determining a total number of distinct nodes of interest of the graph reached during the traversal walks.

12. A computer system comprising at least one microprocessor subsystem implemented by multiple processors configured to carry out the method of any of the previous claims.

**13.** A computer program product embodied in a non-transitory computer readable medium and comprising computer instructions that when executed by a computer system comprising at least one microprocessor subsystem implemented by multiple processors, cause the multiple processors to carry out the method of any of the claims 1-11.

FIG. 1

200

**FIG. 2**

Graph Analysis Component 300

Random Walker Module 302

Feature Extraction Module 304

Labeling Module 306

FIG. 3

Start

Receive a graph of nodes and edges — 402

Receive an identification of a starting node in the graph — 404

Automatically perform traversal walks on the graph from the starting node — 406

Determine one or more metrics based on the traversal walks — 408

Use at least a portion of the one or more metrics to predict an illicit activity or entity — 410

End

**FIG. 4**

Start

Receive a node —502

Node missing label? —504

Yes

Generate a label for the node using a machine learning model —506

No

Yes

More nodes to analyze? —508

No

End

**FIG. 5**

Start

Arrive at a node and update a list of nodes ⌐602

At least one
stopping criterion
met? ⌐604

No

Randomly select a neighboring node to
traverse to ⌐606

Yes

Provide the list of nodes ⌐608

End

**FIG. 6**

**FIG. 7**